# EUROPEAN PATENT APPLICATION

(11) **EP 4 228 065 A1**
(43) Date of publication of application: **16.08.2023**
(21) Application number: 23156756.1
(22) Date of filing: 15.02.2023
(51) Int. Cl.: H01M 50/122, H01M 50/124, H01M 50/126

(54) **BATTERY PACKAGING MATERIAL**

(30) Priority: 15.02.2022 JP 2022021077; 16.01.2023 JP 2023004444
(71) Applicant: Resonac Packaging Corporation, Hikone-shi, Shiga (JP)
(72) Inventor: Kawakita, Keitaro, Hikone-shi, Shiga (JP)
(74) Representative: Hoffmann Eitle

(57) **Abstract**

Conflicting properties that a protective tape is not accidentally peeled off and can be peeled off without leaving an adhesive of the protective tape are given to a surface of a battery packaging material. The battery packaging material includes a substrate layer 13, a heat-fusible resin layer 15, a barrier layer 11 arranged between the substrate layer and the heat-fusible resin layer, and a substrate protective layer 20 as an outermost layer arranged on an outer side of the substrate layer. The substrate protective layer 20 includes a binder resin 21, wax, resin beads, and inorganic fine particles as solid fine particles 22. The solid fine particles 22 project outward from a surface of the substrate protective layer 20 to form a protrusion 30. In a plan view of the substrate protective layer 20, an area ratio of a portion of the protrusion 30 having a height of 1 um or more from a reference plane of an arithmetic average height Sa is 5% to 20%.

## Description

### Technical Field

The present invention relates to a packaging material for a power storage device, such as, e.g., a battery or a capacitor used for a mobile device including, e.g., a smartphone and a tablet computer, or a battery or a capacitor used to store electric power for an electric vehicle, wind power generation, solar power generation, and nighttime electricity.

### Background of the Invention

In a production process of a battery, when a surface of a packaging material is damaged, the appearance of the article is impaired. In order to prevent the occurrence of poor appearance during the production process, a method is employed in which a protective tape is adhered to the packaging material, and the protective tape is peeled off after completion of the production.

Although the protective tape is required to have adhesive properties to prevent the protective tape from being peeled off during the production process, in a case where it is firmly adhered, the adhesive agent of the protective tape may remain on the packaging material after the peeling. Further, in the packaging material in which a colored layer containing carbon black is laminated on the surface of the packaging material, the colored layer may also be peeled off together with the protective tape.

With respect to the problem of the protective tape, the adhesive residues after peeling the protective layer have been conventionally addressed by the adhesive force of the protective tape (see Patent Document 1). Further, a technique for strengthening a colored layer has been proposed to cope with the peeling of the colored layer (see Patent Document 2).

### Prior Art Document

### Patent Document

Patent Document 1: Japanese Unexamined Patent Application Publication No. 2020-155364
Patent Document 2: Japanese Unexamined Patent Application Publication No. 2006-206805

### SUMMARY OF THE INVENTION

### Problems to be Solved by the Invention

However, the technique disclosed in Patent Document 1 is not a measure to prevent adhesive residues on the packaging material. Further, the technique disclosed in Patent Document 2 does not solve the problem of adhesive residues for the packaging material in which the outermost layer is not a colored layer containing carbon black.

### Means for Solving the Problems

In view of the above-described background art, the present invention aims to impart conflicting properties of preventing unintentional peeling of a protective tape and enabling peeling without leaving an adhesive agent of the protective tape on a surface of a battery packaging material and to prevent appearance deterioration due to residues of an adhesive agent of the protective tape.

That is, the present invention has the configuration recited in the following items [1] to [10].
[1] A battery packaging material comprising:
   a substrate layer;
   a heat-fusible resin layer;
   a barrier layer arranged between the substrate layer and the heat-fusible resin layer; and
   a substrate protective layer as an outermost layer arranged on an outer side of the substrate layer,
   wherein the substrate protective layer includes
   a binder resin, and
   wax, resin beads, and inorganic fine particles as solid fine particles, the solid fine particles projecting outward from a surface of the substrate protective layer to form protrusions, and
   wherein, in a plan view of the substrate protective layer, an area ratio of a portion of the protrusion having a height of 1 um or more from a reference plane of an arithmetic average height Sa is 5% to 20%.
[2] The battery packaging material as recited in the above-described Item [1],
   wherein an average particle diameter of the wax is 5 um to 20 um, an average particle diameter of the resin beads is 1 um to 10 um, and an average particle diameter of the inorganic fine particles is 1 um to 10 um, and
   wherein in the substrate protective layer, a content rate of the wax is 1 mass% to 20 mass%, a content rate of the resin beads is 1 mass% to 20 mass%, a content rate of the inorganic fine particles is 1 mass% to 40 mass%, and a total content rate of the wax, the resin beads, and the inorganic fine particles is 30 mass% to 50 mass%.
[3] The battery packaging material as recited in the above-described Items [1] or [2],
   wherein the wax is at least one wax selected from the group consisting of polyethylene wax, polypropylene wax, and polytetrafluoroethylene wax.
[4] The battery packaging material as recited in any one of the above-described Items [1] to [3],
   wherein the resin beads are at least one type of resin beads selected from the group consisting of acrylic resin beads, urethane resin beads, polyethylene resin beads, polystyrene resin beads, silicone resin beads, and fluororesin beads.
[5] The battery packaging material as recited in any one of the above-described Items [1] to[ 4],
   wherein the inorganic fine particles are at least one type of inorganic fine particles selected from silica, alumina, kaolin, calcium oxide, calcium carbonate, calcium sulfate, barium sulfate, and calcium silicate.
[6] The battery packaging material as recited in any one of the above-described Items [1] to [5]],
   wherein the binder resin is at least one type of a resin selected from the group consisting of an acryl-based resin, a urethane-based resin, a polyolefin-based resin, a phenoxy-based resin, and a polyester-based resin.
[7] The battery packaging material as recited in any one of the above-described Items [1] to [6],
   wherein at least one of the substrate protective layer and the substrate layer contains a coloring agent.
[8] The battery packaging material as recited in any one of the above-described Items [1] to [6],
   wherein the barrier layer and the substrate layer are laminated via an adhesive layer, and at least one of the substrate protective layer, the substrate layer, and the adhesive layer includes a coloring agent.
[9] The battery packaging material as recited in any one of the above-described Items [1] to [6],
   wherein a colored layer is arranged at least one of between the substrate protective layer and the substrate layer and between the substrate layer and the barrier layer.
[10] The battery packaging material as recited in any one of the above-described Items [1] to [6],
   wherein the barrier layer and the substrate layer are laminated via an adhesive layer, and a colored layer is provided at least one of between the substrate protective layer and the substrate layer, between the substrate layer and the adhesive layer, and between the adhesive layer and the barrier layer.

### Effects of the Invention

In the battery packaging material as recited in the above-described Item [1], the surface texture is defined by three distinct solid fine particles contained in the substrate protective layer and protrusions formed by these solid fine particles. That is, in the plan view of the substrate protective layer, an area ratio of the portion of the protrusion having a height of 1 um or more from a reference plane in the arithmetic average height Sa is defined as 5% to 20%. According to the specified surface texture, since the portion where the contact amount of the adhesive agent is large and the portion where the contact amount is small are finely coexisted, it is possible to be easily peeled off after use while keeping an adhesive strength when required, which hardly generates adhesive residues after peeling.

According to the battery packaging material as recited in the above-described Item [2], by defining each of the average particle diameter and the content rate of wax as solid fine particles, resin beads, inorganic fine particles, and the total content rate of three types of solid fine particles, a desired surface texture is formed, and adhesive residues after peeling the protective tape is suppressed.

According to the battery packaging material as recited in the above-described Item [3], the surface texture defined by the selected wax is formed, and adhesive residues after peeling thee protective tape is suppressed.

According to the battery packaging material as recited in the above-described Item [4], the surface texture defined by the selected resin beads is formed, and adhesive residues after peeling the protective tape is suppressed.

According to the battery packaging material as recited in the above-described Item [5], the surface texture defined by the selected inorganic fine particles is formed, and adhesive residues after peeling the protective tape is suppressed.

According to the battery packaging material as recited in the above-described Item [6], since the adhesion suitability of the selected binder resin and the adhesive agent of the protective tape is good, the adhesive strength can be differentiated between the protrusion and portions other than the protrusions.

Since the battery packaging material as recited in the above-described Items [7], [8], [9], and [10] is colored by a coloring agent, light reflection by the barrier layer is suppressed, and therefore, the visibility of the adhesive residue portion of the protective tape is improved, and the adhesive residue is easily determined. Further, the design properties can also be imparted.

### BRIEF DESCRIPTION OF THE DRAWINGS

The preferred embodiments of the present invention are shown by way of example, and not limitation, in the accompanying figures.
FIG. 1 is a cross-sectional view showing one example of a battery packaging material according to the present invention.
FIG. 2 is a schematic diagram showing representing contour lines of a height of +1 um from the reference plane of the arithmetic average height Sa in the surface unevenness image of the surface of the substrate protective layer of the battery packaging material.
FIG. 3 is a cross-sectional view showing another example of a battery packaging material according to the present invention.

### EMBODIMENTS FOR CARRYING OUT THE INVENTION

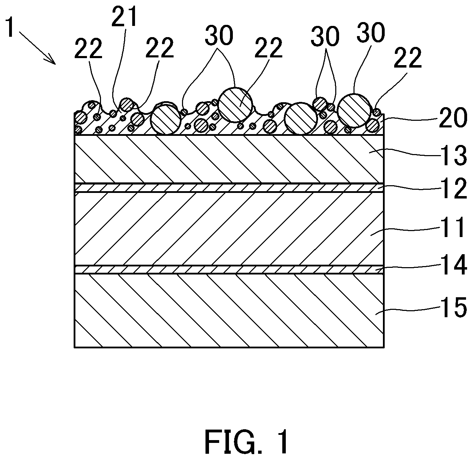

FIG. 1 shows one embodiment of a battery packaging material according to the present invention.

In the following description, a layer assigned by the same reference symbol represents the same or equivalent layer, and therefore, the duplicate description thereof will be omitted.

### [Embodiment of Battery Packaging Material]

In the battery packaging material 1 shown in FIG. 1, a substrate layer 13 is bonded to one surface of a barrier layer 11 via a first adhesive layer 12, a heat-fusible resin layer 15 is bonded to the other surface via a second adhesive layer 14, and a substrate protective layer 20 is laminated to the substrate layer 13.

A battery case is produced by arranging the battery packaging materials 1 with the heat-fusible resin layers 15 faced to each other and heat-sealing the peripheries of the battery packaging materials 1, and a bare cell is encapsulated in the battery case. In the battery case, the substrate protective layer 20 is arranged on the outer side, and the heat-fusible resin layer 15 is arranged on the inner side.

In the present specification, when describing the positions of the layers constituting the battery packaging material with directions, the direction toward the substrate protective layer is referred to as the outer side, and the direction toward the heat-fusible resin layer is referred to as the inner side in accordance with the directions of the inner and outer sides of the case.

The outer surface of the battery packaging material 1 requires that the applied protective tape be firmly adhered without being unintentionally peeled off, but is required to have conflicting properties such that when the protective tape is not required, it does not leave the adhesive agent of the tape and can be peeled off cleanly without damaging the adhered surface.

### (Substrate Protective Layer)

The substrate protective layer 20 is a layer that imparts an excellent slipperiness to the surface of the battery packaging material to improve the formability and to impart excellent chemical resistance, solvent resistance, and abrasion resistance.

The substrate protective layer 20 is a cured film made of a resin composition including a binder resin 21 and a plurality of solid fine particles 22 which will be described later. Some of the solid fine particles 22 in the cured film are buried in the binder resin 21, but the other of them protrudes outward from the surface of the binder resin 21 to form protrusions 30. Therefore, on the surface of the substrate protective layer 20, not only ultrafine unevenness by the binder resin 21 but also large unevenness by the protrusions 30 are formed.

Since the protrusion 30 protrudes high on the surface of the substrate protective layer 20, the adhesive agent of a protective tape is brought into contact with the top portions of the protrusions 30, but is hardly brought into contact with the inclined portions around them. On the other hand, since the portions other than the protrusions 30 are smoother than the protrusions 30, the adhesive agent is easily brought into contact thereto. At the portion with which the adhesive agent is hard to be brought into contact, the adhesive strength becomes weaker because the contact amount of the adhesive agent is small. At a portion with which the adhesive agent is easily brought into contact, the adhesive strength becomes stronger because the contact amount of the adhesive agent is large.

As described above, since a state is generated in which the portion in which the contact amount of the adhesive is large and the portion in which the contact amount of the adhesive is small on the surface of the substrate protective layer 20, it is possible to easily peel off the protective film after use while keeping adhesive strength when needed, and adhesive agent residues are less likely to be generated after peeling.

The balance between the adhesive strength when the protective tape is required and the easy peeling property after use is affected by the composition of the resin composition constituting the substrate protective layer 20 and the surface texture of the substrate protective layer 20. The proper balance can be obtained by defining them.

The resin composition constituting the substrate protective layer 20 includes three types of a binder resin 21, and wax, and inorganic fine particles as solid fine particles 22.

As the binder resin 21, at least one type of a resin selected from the group consisting of an acryl-based resin, a urethane-based resin, a polyolefin-based resin, a phenoxy-based resin, and a polyester-based resin is preferably used. Since these resins are excellent in adhesion suitability to the adhesive agent of the protective tape, adhesive strength can be differentiated between the protrusion 30 and a portion other than the protrusion 30. Further, these resins have higher chemical resistance and solvent resistance, and therefore, the solid fine particles are less likely to fall off due to degradation of resin or the like. Among these resins, particularly preferred resins are a urethane-based resin, a polyester urethane-based resin, and a urethane phenoxy-based resin.

Further, the binder resin may be composed of a main agent resin containing at least one of the above-described resins and a curing agent for curing the main agent resin.

The curing agent is not particularly limited and may be appropriately selected depending on the main agent. The curing agent can be exemplified by an isocyanate compound, such as, e.g., hexamethylene diisocyanate (HDI), isophorone diisocyanate (IPDI), tolylene diisocyanate (TDI), diphenylmethane diisocyanate (MDI), xylylene diisocyanate (XDI), or a modified product of these isocyanate compounds.

The curing agent is preferably contained by 5 parts by mass to 30 parts by mass with respect to 100 parts by mass of the main agent. When it is less than 5 parts by mass, adhesive property and solvent resistance to the substrate layer 13 may be reduced. When it exceeds 30 parts by mass, the substrate protective layer 20 may become hard, which may deteriorate the formability.

As the solid fine particles 22, three kinds of fine particles, i.e., wax, resin beads, and inorganic fine particles, are used. They are different in hardness and differ in hardness from a cured binder resin 21. The protrusions 30 by the solid fine particles 22 are formed on the surface of the substrate protective layer 20, and therefore, portions different in hardness, i.e., the resin binder 21 and three types of solid fine particles, exist on the surface the substrate protective layer 20.

The peeling easiness of the protective tape differs depending on the hardness of the application surface. When the protective tape is peeled off from the substrate protective layer 20 having the above-described surface, the peeling timing of the adhesive agent shifts at the portions different in the hardness, and the force applied to adhesive is dispersed. For this reason. cohesive fracture of the adhesive agent is unlikely to occur, and adhesive residues are unlikely to occur.

The battery packaging material is filled with a battery cell and sealed, and then subjected to a degassing step in which the battery is degassed by applying a high temperature and a high pressure with the protective tape adhered thereto. The three types of fine particles, i.e., the wax, the resin beads, and the inorganic fine particles, are different in hardness even at the time of a high temperature, and therefore, a predetermined surface texture can be ensured even after the degassing step.

Since wax is low in crosslink density and low in heat-resistant temperature, the wax can soften during the degassing process and deform from a spherical shape to a flat shape. The resin beads are high in crosslink density and are higher in heat resistant temperature than the wax and therefore hardly deform during the degassing process, thereby keeping the spherical shape and preventing extreme deformation of the wax. The inorganic fine particles are much higher in melting point than the resin beads and hard, and therefore do not deform during the degassing process.

The surface texture of the substrate protective layer 20 is required in a plan view area ratio of the portion of the protrusion having a height of 1 um or more from a reference plane of an arithmetic average height Sa is 5% to 20%.

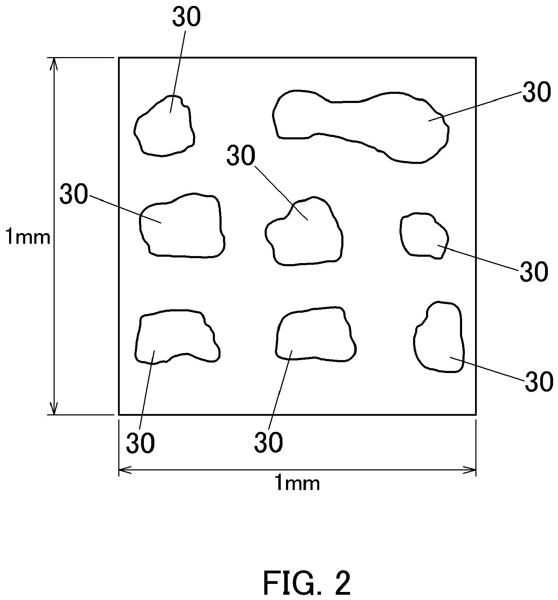

FIG. 2 is a schematic diagram showing a contour of +1 um height from the reference plane of the arithmetic average height Sa on the surface unevenness image of the surface of the substrate protective layer 20 measured using a white interferometer according to the method specified in ISO25178. The reference plane of the arithmetic average height Sa is the plane of the average height of the measuring region of the surface of the substrate protective layer 20 (in this embodiment, the square region of 1 mm square), and the region surrounded by the contour line represents the portion of the protrusion 30 having a height of 1 um or more in a plan view.

Note that in the following description, the "area ratio of a portion of the protrusion having a height of 1 um or more from the reference surface in the arithmetic average height Sa in a plan view" may be abbreviated as the "plan view area ratio of a portion having a height of 1µm or more" or the "plan view area ratio".

The plan view area ratio of the protrusion having a height of 1 um or more indicates the degree of surface unevenness. The smaller the plan view area ratio, the lower the protrusion 30, or the fewer the protrusion 30, the smoother the surface, and the larger the area of the protective tape where the adhesive easily contacts. Conversely, the larger the plan view area ratio, the higher the protrusion 30, or the more the protrusion 30, the rougher the surface, and the larger the area of the protective tape where the adhesive is less likely to contact.

When the plan view area ratio is less than 5%, the contact area of the adhesive agent of the protective tape becomes large, and the peeling strength becomes strong, so that adhesive residues at the time of peeling is likely to occur. On the other hand, when the plan view area exceeds 20%, the contact area of the adhesive agent becomes small, and the peeling strength of the protective tape becomes weak, so that unintentional peeling is likely to occur when needed. Therefore, the plan view area ratio is set to 5% to 20%. A preferable range of the plan view area ratio is 6% to 15%.

Further, in order to obtain the above-described surface texture of the substrate protective layer 20, that is, in order to make the plan view area ratio of the portion having a height of 1 um or more 5% to 20%, it is preferable to set the average particle diameter and the content rate of the three types of solid fine particles as follows.

The average particle diameter of the wax is preferably from 5 um to 20 um, the average particle diameter of the resin beads is preferably from 1 um to 10 um, and the inorganic fine particles is preferably from 1 um to 10 um. As for the particularly preferred average particle diameter, it is 5 um to 15 um in the case of the wax, 1 um to 5 um in the case of the resin beads, and 1 um to 5 um in the case of the inorganic grains.

Three types of solid fine particles preferably make the particle size of the wax larger than the resin beads and the inorganic fine particles to form a larger protrusion 30 by the wax. Since the adhesive strength of the wax by the adhesive agent is weaker than that of the resin beads and inorganic fine particles, the portion strong in the adhesive strength and the portion weak in the adhesive strength are easily formed by increasing the protrusion 30 by the wax, and consequently, the adhesive residue suppressing effect increases. The wax is weak in adhesive strength with respect to the adhesive because the wax has an effect as a lubricant.

As for the preferred content rate of the solid fine particles in the substrate protective layer 20, it is 1 mass% to 20 mass% in the case of the wax, 1 mass% to 20 mass% in the case of the resin beads, 1 mass% to 40 mass% in the case of the inorganic fine particles. And the total content of the three types of particles is preferably 30 mass% to 50 mass%. The particularly preferred content rate of the solid fine particles is 3 mass% to 15 mass% in the case of the wax, 5 mass% to 15 mass% of the resin beads, 15 mass% to 30 mass% in the case of the inorganic fine particles. A particularly preferred total content rate is 35 mass% to 45 mass%.

Note that the content rate of the solid fine particles rate is a ratio of the solid fine particles to the sum of the binder resin and the solid fine particles, not including the solvent used to adjust the viscosity at the time of coating.

The wax acts as a lubricant and contributes to lowering the bonding property with respect to the protective tape and making the area ratio of the protrusion of 1 um or more in a large particle size within a predetermined range. The resin beads provide a fine unevenness effect and prevent the wax from being excessively deformed due to the heat during sealing. The inorganic fine particles contribute to making the heat resistance, the glossiness, and the color tone to predetermined ranges. When the wax, the resin beads, and the inorganic fine particles are set to the above-described content rates, the effect of each particle can be effectively balanced.

The solid fine particles are required to contain at least one of the wax, the resin beads, and the inorganic fine particles, and may contain two or more from one category. Examples of the fine particles belonging to each category can be exemplified as follows.

The wax includes natural wax and synthetic wax, and the synthetic wax is widely used in paints, inks, and adhesive agents because it is easy to control the physical properties.

As the synthetic wax, polyethylene wax, polypropylene wax, and polytetrafluoroethylene wax are exemplified. Polyethylene wax and polypropylene wax have many particle size options, and the additive amount makes it easier to adjust the roughening level. Polytetrafluoroethylene wax has better slipperiness and a higher melting point compared with polyethylene wax and polypropylene wax, so that it is less likely to be deformed when sealed at a high temperature and can maintain the slipperiness.

As the resin beads, acrylic resin beads, urethane resin beads, polyethylene resin beads, polystyrene resin beads, silicone resin beads, and fluororesin beads can be exemplified.

As the inorganic fine particles, silica, alumina, kaolin, calcium oxide, calcium carbonate, calcium sulfate, barium sulfate, and calcium silicate can be exemplified. Adding inorganic fine particles having a smaller particle size than the resin beads facilitates the adjustment of the glossiness (matting) of the coating film.

In the present invention, the wax is added to mainly form a large unevenness on the coating film to impart a sliding effect to the coating film surface, and the resin beads are added to mainly impart an optical diffusion effect (matting effect) to the coating film surface by forming a fine unevenness on the coating film. For example, the polyethylene wax is added as a roughening agent, is easily deformed, and functions as a lubricant, and the polyethylene resin beads are added as a matting agent. Further, it is preferable that the average particle diameter of the wax be larger than the average particle diameter of the resin beads, as described above, due to the difference in the effectiveness between the wax and the resin beads.

Further, in addition to the binder resin 21 and the solid fine particles 22, a lubricant and/or a surfactant may be added to the substrate protective layer 20. A lubricant and a surfactant are effective in lowering the adhesive strength of the adhesive force of the protective tape, and they are deposited on the substrate protective layer 20 surface. This improves the peeling property of the protective tape, making adhesive residues less likely occur.

As the lubricant, the following various amidos can be exemplified.

As saturated fatty acid amides, lauramide, palmitamide, stearamide, behenamide, and hydroxystearic acid amide can be exemplified.

As unsaturated fatty acid amides, oleamide and erucamide can be exemplified.

As substituted amides, N-oleylpalmitamide, N-stearyl stearamide, N-stearyl oleamide, N-oleyl stearamide, and N-stearyl erucamide can be exemplified.

As methylolamides, methylol stearamide can be exemplified.

As saturated fatty acid bisamides, methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenebisbehenic acid amide, hexamethylenehydroxystearic acid amide, N,N'-distearyladipine acid amide, and N,N'-distearylsebacic acid amide can be exemplified.

As unsaturated fatty acid bisamides, ethylenebisoleic acid amide, ethylenebiserucic acid amide, hexamethylenebisoleic acid amide, N,N'-dioleyladipine acid amide, and N,N'-dioleylsebacic acid amide can be exemplified.

As fatty acid ester amides, stearamide ethyl stearate can be exemplified.

As aromatic bisamides, m-xylylene bisstearic acid amide, m-xylylene bishydroxystearic acid amide, and N,N'-cystearyl isophthalic acid amide can be exemplified.

As the surfactant, an anionic surfactant, a cationic surfactant, and a nonionic surfactant can be exemplified.

The preferred thickness of the substrate protective layer 20 is 1 um to 12 um, and the particularly preferred thickness is 2 um to 10 um.

The preferred materials of the layers other than the substrate protective layer 20 in the battery packaging material 1 are as follows.

### (Barrier Layer)

The barrier layer 11 is responsible for providing the battery packaging material 1 with a gas barrier property for preventing oxygen and/or water from entering. As the barrier layer 11, it is not particularly limited, but a metal foil, such as, e.g., an aluminum foil, a SUS foil (stainless-steel foil), a copper foil, a nickel foil, a titanium foil, and a clad foil, can be exemplified. As the barrier layer 11, an aluminum foil can be preferably used. In particular, an Al-Fe-based alloy foil containing Fe of 0.7 mass% to 1.7 mass% is preferable because it is excellent in strength and ductility and provides excellent formability.

The thickness of the barrier layer 11 is preferably 20 um to 100 um. When the thickness is 20 um or more, it is possible to prevent the generation of pinholes at the time of rolling when producing a metal foil, and when the thickness is 100 um or less, it is possible to reduce stress at the time of molding, such as, e.g., stretch forming and drawing, which in turn can improve the formability. The particularly preferred thickness of the barrier layer 11 is 30 um to 80 um.

Further, it is preferable that the barrier layer 11 is subjected to a base treatment, such as, e.g., a chemical conversion treatment, on at least a surface of the metal foil on the side of the heat-fusible resin layer 15. By being subjected to such a chemical conversion treatment, it is possible to sufficiently prevent the metal foil surface from being corroded due to the contents (such as, e.g., electrolytes of a battery).

### (Substrate layer)

As the substrate layer 13, a heat-resistant resin film that does not melt at the heat-sealing temperature at the time of heat-sealing the battery packaging material 1 is used. As the heat-resistant resin, a heat-resistant resin having a melting point higher than the melting point of the resin constituting the heat-fusible resin layer 15 by 10°C or more, preferably 20°C or more, is used.

The examples of the resin satisfying this condition include a polyamide film, such as, e.g., a nylon film, a polyamide film, and a polyester film, and these stretched films are preferably used. Among these, as the substrate layer 13, a biaxially stretched polyamide film such as a biaxially stretched nylon film, a biaxially stretched polybutylene terephthalate (PBT) film, a biaxially stretched polyethylene terephthalate (PET) film, or a biaxially stretched polyethylene naphthalate (PEN) film are preferably used.

The example of the nylon film includes, but not particularly limited thereto, a 6 nylon film, a 6, 6 nylon film, and an MXD nylon film. Note that the substrate layer 13 may be formed of a single layer, or may be formed of, for example, a multi-layer (a multi-layer formed of a PET film/a nylon film) formed of a polyester film/a polyamide film.

The thickness of the substrate layer 13 is preferably 9 um to 50 um, which makes it possible to secure sufficient strength as a packaging material and to reduce stresses at the time of forming, such as, e.g., stretch forming and drawing, to improve the formability. The more preferable thickness of the substrate layer 13 is 12 um to 30 um.

### (Heat Fusible Resin Layer)

The heat-fusible resin layer 15 imparts excellent chemical resistance against an electrolyte having high corrosiveness and also has a role of imparting a heat-sealing property to the battery packaging material 1.

The resin constituting the heat-fusible resin layer 15 is preferably a polyolefin-based resin single-layer or multi-layer film made of, e.g., a propylene-based resin, and is preferably a non-stretched film. As the propylene-based resin, an ethylene-propylene copolymer containing ethylene and propylene as a copolymerization component can be exemplified.

The ethylene-propylene copolymer may be either a random copolymer or a block-copolymer. As a multilayer ethylene-propylene copolymer film, a three-layer film of random copolymer-block copolymer-random copolymer can be recommended. The multilayer film can be produced by coextrusion or the like.

The thickness of the heat-fusible resin layer 15 is preferably 20 um to 100 um, and more preferably 30 um to 80 um. The ratio of the thickness of each layer of the three-layer film of the above-described random copolymer-block copolymer-random copolymer is preferably 1 to 3:4 to 8:1 to 3.

The heat-fusible resin layer 15 may contain a lubricant. The type of the lubricant is similar to that added to the substrate protective layer 20, and fatty acid amides are particularly preferred. Further, the lubricant content in the heat-fusible resin layer 15 is preferably 500 ppm to 3,000 ppm. Generally, in the production process of the battery packaging material 1, all layers are laminated and then wound on a roll to be aged. The lubricant in the heat-fusible resin layer 15 is precipitated on the surface by aging and transferred to the substrate protective layer 20, which contributes to suppress the generation of adhesive agent residues of the protective tape.

### (First Adhesive Layer)

The first adhesive layer 12 is exemplified by, but not particularly limited to, an adhesive layer made of, e.g., a two-part curing type adhesive agent. As the two-part curing type adhesive agent, a two-part curing type adhesive agent composed of a first liquid (main agent) and a second liquid (curing agent) can be exemplified. The first liquid is made of one or more types of polyols selected from the group consisting of a polyurethane-based polyol, a polyester-based polyol, a polyether-based polyol, and a polyester urethane-based polyol, and the second liquid is composed of isocyanate.

Among them, it is preferable to use a two-part curing type adhesive agent composed of a first liquid composed of one or two or more types of polyols selected from the group consisting of a polyester-based polyol and a polyester urethane-based polyol, and two liquids (curing agent) composed of isocyanate. The preferred thickness of the first adhesive layer 12 is 2 um to 5 um.

### (Second Adhesive Layer)

The second adhesive layer 14 is recommended to use, but not particularly limited thereto, an adhesive agent containing at least one type of a polyurethane-based resin, an acryl-based resin, an epoxy-based resin, a polyolefin-based resin, an elastomer-based resin, a fluorine-based resin, and an acid-modified polypropylene resin. Among them, an adhesive agent formed of a polyurethane composite resin having an acid-modified polyolefin as a main agent is preferable. The preferred thickness of the second adhesive layer 14 is 2 um to 5 µm.

Note that the first adhesive layer 12 and the second adhesive layer 14 are not essential layers, and the substrate layer 13 may be directly bonded to the barrier layer 11, and the heat-fusible resin layer 15 may be directly bonded to the barrier layer 11.

### (Coloring Agent)

By adding a coloring agent or newly providing a colored layer to the above-described existing layers, the battery packaging material can conceal the metallic color of the barrier layer and color the barrier layer to a desired color, thereby imparting a design property to the packaging material. Further, the light reflection from the barrier layer can be suppressed, which makes it possible to easily find the residues of the adhesive of the protective tape.

In the case of coloring the pre-existing layer, a coloring agent is added to at least one of the substrate protective layer, the substrate layer, and the first adhesive layer. Note that in the battery packaging material not having a first adhesive layer, a coloring agent is added to the substrate protective layer and/or the substrate layer. The coloring agent may be either a pigment or a dye, and may be one type of a coloring agent or may be a combination of two or more types of coloring agents.

Specific examples of the coloring agent include carbon black, calcium carbonate, titanium oxide, zinc oxide, iron oxide, aluminum powder, an azo-based pigment, and a phthalocyanine-based pigment. The coloring agent concentration in each layer is preferably 0.5 mass% or more and less than 5 mass%.

In the case of newly providing a colored layer, the colored layer is provided between at least one of between the substrate protective layer and the substrate layer, between the substrate layer and the first adhesive layer, and between the first adhesive layer and the barrier layer.

Note that in the battery packaging material not having a first adhesive layer, a colored layer is provided between the substrate protective layer and the substrate layer and/or between the substrate layer and the barrier layer. The thickness of the colored layer is preferably 1 um to 10 um. The colored layer is preferably made of a colored resin composition in which the above-described coloring agent is added to a base-resin made of a main agent, such as, e.g., diamine and polyol, and a curing agent. Further, the concentration of the coloring agent of the colored resin composition is preferable 5 mass% or more and 50 mass% or less.

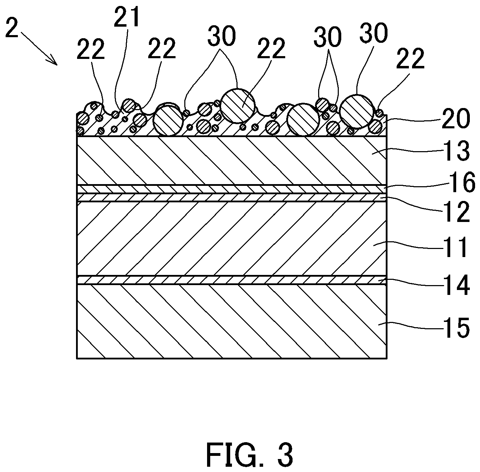

The battery packaging material 2 shown in FIG. 3 is provided with a colored layer 16 between the substrate layer 13 and the first adhesive layer 12.

### EXAMPLES

Battery packaging materials 3 each having the structure shown in FIG. 3 were prepared as Examples and Comparative Examples. The materials common to each example are as follows.

### (Common Material)

As the barrier layer 11, a layer was used in which a chemical conversion treatment solution composed of phosphoric acid, polyacrylic acid (acryl-based resin), chromium (III) salt compound, water, and alcohol was applied to both surfaces of an aluminum foil made of A8021-0 having a thickness of 40 um, and then dried at 180 °C to thereby form a chemical conversion coating film. The chromium adhesion amount of this chemical conversion coating film was 10 mg/m2 per one side.

As the substrate layer 13, a biaxially stretched 6-nylon film having a thickness of 15 um was used.

As the colored layer 16, a black colored layer having a thickness of 3 um was formed on one side of the substrate layer 13 by applying a colored resin composition containing carbon black, diamine, a polyester-based polyol, and a curing agent and allowing it to stand at 40 °C for one day to proceed the crosslinking with drying. That is, the colored layer 16 and the substrate layer 13 were integrated into a two-layer film, and the two-layer film was bonded to another layer.

As the heat-fusible resin layer 15, a non-stretched polypropylene film having a thickness of 30 µm containing 3,000 ppm of erucamide as a lubricant was used.

As the first adhesive layer 12, a two-part curing type urethane-based adhesive agent was used.

As the second adhesive layer 14, a two-part curing type maleic acid-modified propylene adhesive agent was used.

As a solvent to be added to the resin composition of the substrate protective layer 20, a mixture of 50 parts by mass of methyl ethyl ketone and 50 parts by mass of toluene were used.

### (Example 1)

A resin composition and a coating composition for forming the substrate protective layer 20 were prepared by the following method.

Polyester polyol was used as a main agent resin, and an adduct ("A" in Table 1) of trimethylolpropane and hexamethylene diisocyanate (HDI) was used as a curing agent, and 11 parts by mass of the curing agent was blended with 49 parts by mass of the main agent resin 49 to prepare a binder resin.

As the solid fine particles, the four types of solid fine particles, i.e., polytetrafluoroethylene wax having an average particle diameter of 12 um, polyethylene resin beads having an average particle diameter of 5 um, silica having an average particle diameter of 2 um, and barium sulfate having an average particle diameter of 1 um, were used.

Four types of the solid fine particles were blended with the binder resin at the content rate shown in Table 1 to prepare a resin composition, and 50 parts by mass of the resin composition and 100 parts by mass of the solvent were mixed to prepare a coating composition. The total content rate of solid fine particles in the resin composition was as shown in Table 1.

Then, a first adhesive layer 12 having a thickness of 3 um was formed on one surface of the barrier layer 11, and the surface of the colored layer 16 of the substrate layer 13 (two-layer film) with a colored layer 16 was overlaid via the first adhesive layer 12 and dry-laminated. Next, a second adhesive layer 14 having a thickness of 3 µm was formed on the other surface of the barrier layer 11, and a heat-fusible resin layer 15 was laminated via the second adhesive layer 14, sandwiched and pinched between a rubber nip roll and a laminate roll heated to 100° C and then dry-laminated.

This resulted in a six-layer film in which the substrate layer 13, the colored layer 16, the first adhesive layer 12, the barrier layer 11, the second adhesive layer 14, and the heat-fusible resin layer 15 were laminated in order from the outside to the inside.

Next, a coating composition for the substrate protective layer 20 was applied to the surface of the six-layer substrate layer 13, dried, wound on a roll, and aged at 40 °C for 10 hours. The thickness of the substrate protective layer 20 after aging was 2 um. Thus, a seven-layer battery packaging material 2 was prepared.

### (Example 2)

A resin composition and a coating composition for forming the substrate protective layer 20 were prepared by the following method.

The same main agent resin and curing agent as those of Example 1 were blended at a ratio of 10 parts by mass of the curing agent with respect to 48 parts by mass of the main agent resin to prepare a binder resin.

As the solid fine particles, four types of solid fine particles, i.e., polytetrafluoroethylene wax having an average particle diameter of 18 um, polyethylene resin beads having an average particle diameter of 7 um, silica having an average particle diameter of 2 um, and barium sulfate having an average particle diameter of 1 um, were used.

Four types of solid fine particles were blended with the binder resin at the content rate shown in Table 1 to prepare a resin composition, and 45 parts by mass of the resin composition and 100 parts by mass of the solvent were mixed to prepare a coating composition. The total content rate of the solid fine particles in the resin composition was as shown in Table 1.

A seven-layer battery packaging material 2 was prepared in the same manner as in Example 1 except for the resin composition and the coating composition for the substrate protective layer 20. The thickness of the substrate protective layer 20 after aging was 2.5 um.

### (Example 3)

A resin composition and a coating composition for forming the substrate protective layer 20 were prepared by the following method.

An acrylic polyol resin was used as a main agent resin, the same curing agent as in Example 1 was used, and 9 parts by mass of the curing agent was blended with 46 parts by mass of the main agent resin was used as a binder resin.

As the solid fine particles, four types of solid fine particles, i.e., polytetrafluoroethylene wax having an average particle diameter of 12 um, acrylic resin beads having an average particle diameter of 6 um, alumina having an average particle diameter of 1 um, and barium sulfate having an average particle diameter of 1 um, were used.

Four types of solid fine particles were blended with the binder resin at the content rate shown in Table 1 to prepare a resin composition, and 45 parts by mass of the resin composition and 100 parts by mass of the solvent were mixed to prepare a coating composition. The total content rate of the solid fine particles in the resin composition was as shown in Table 1.

A seven-layer battery packaging material 2 was prepared in the same manner as in Example 1 except for the resin composition and the coating composition for the substrate protective layer 20. The thickness of the substrate protective layer 20 after aging was 2 um.

### (Example 4)

A resin composition and a coating composition for forming the substrate protective layer 20 were prepared by the following method.

The same main agent resin and curing agent as those of Example 3 were used, and 8 parts by mass of the curing agent was blended with 43 parts by mass of the main agent resin to prepare a binder resin.

As the solid fine particles, four types of solid fine particles, i.e., polytetrafluoroethylene wax having an average particle diameter of 15 um, acrylic resin beads having an average particle diameter of 6 um, silica having an average particle diameter of 2 um, and barium sulfate having an average particle diameter of 1 um, were used.

Four types of solid fine particles were blended with the binder resin at the content rate shown in Table 1 to prepare a resin composition, and 40 parts by mass of the resin composition and 100 parts by mass of the solvent were mixed to prepare a coating composition. The total content rate of the solid fine particles in the resin composition was as shown in Table 1.

A seven-layer battery packaging material 2 was prepared in the same manner as in Example 1 except for the resin composition and the coating composition for the substrate protective layer 20. The thickness of the substrate protective layer 20 after aging was 2.5 um.

### (Example 5)

A resin composition and a coating composition for forming the substrate protective layer 20 were prepared by the following method.

The same main agent resin and curing agent as those of Example 1 were used, and 12 parts by mass of the curing agent was blended with 53 parts by mass of the main agent resin to prepare a binder resin.

As the solid fine particles, four types of solid fine particles, i.e., polyethylene wax having an average particle diameter of 10 um, polyethylene resin beads having an average particle diameter of 5 um, alumina having an average particle diameter of 1 um, and calcium carbonate having an average particle diameter of 3 um, were used.

Four types of the solid fine particles were blended with the binder resin at the content rate shown in Table 1 to prepare a resin composition, and 50 parts by mass of the resin composition and 100 parts by mass of the solvent were mixed to prepare a coating composition. The total content rate of the solid fine particles in the resin composition was as shown in Table 1.

A seven-layer battery packaging material 2 was prepared in the same manner as in Example 1 except for the resin composition and the coating composition for the substrate protective layer 20. The thickness of the substrate protective layer 20 after aging was 1.8 um.

### (Example 6)

A resin composition and a coating composition for forming the substrate protective layer 20 were prepared by the following method.

A polyurethane polyol resin was used as a main agent resin, an adduct of trimethylolpropane and hexamethylene diisocyanate (HDI), and an equivalent mixture ("B" in Table 1) and adduct tolylene diisocyanate (TDI), and trimethylolpropane, were used as a curing agent. 46 parts by mass of the main agent resin was blended with 10 parts by mass of the curing agent to prepare a binder resin.

As the solid fine particles, four types of solid fine particles, i.e., polyethylene wax having an average particle diameter of 20 um, polyethylene resin beads having an average particle diameter of 7 um, silica having an average particle diameter of 2 um, and calcium silicate having an average particle diameter of 2 um, were used.

Four types of solid fine particles were blended with the binder resin at the content rate shown in Table 1 to prepare a resin composition, and 45 parts by mass of the resin composition and 100 parts by mass of the solvent were mixed to prepare a coating composition. The total content rate of the solid fine particles in the resin composition was as shown in Table 1.

A seven-layer battery packaging material 2 was prepared in the same manner as in Example 1 except for the resin composition and the coating composition for the substrate protective layer 20. The thickness of the substrate protective layer 20 after aging was 3 um.

### (Example 7)

A resin composition and a coating composition for forming the substrate protective layer 20 were prepared by the following method.

The same main agent resin and curing agent as those of Example 6 were used, and 8 parts by mass of the curing agent was blended with 42 parts by mass of the main agent resin to prepare a binder resin.

As the solid fine particles, four types of solid fine particles, i.e., polyethylene wax having an average particle diameter of 20 um, polyethylene resin beads having an average particle diameter of 10 um, silica having an average particle diameter of 2 um, and barium sulfate having an average particle diameter of 1 um, were prepared.

Four types of solid fine particles were blended with the binder resin at the content rate shown in Table 1 to prepare a resin composition, and 40 parts by mass of the resin composition and 100 parts by mass of the solvent were mixed to prepare a coating composition. The total content rate of solid fine particles in the resin composition was as shown in Table 1.

A seven-layer battery packaging material 2 was prepared in the same manner as in Example 1 except for the resin composition and the coating composition for the substrate protective layer 20. The thickness of the substrate protective layer 20 after aging was 3 um.

### (Example 8)

A resin composition and a coating composition for forming the substrate protective layer 20 were prepared by the following method.

The same main agent resin and curing agent as those of Example 1 were used, and 10 parts by mass of the curing agent was blended with 48 parts by mass of the main agent resin as a binder resin.

As the solid fine particles, three types of solid fine particles, i.e., polytetrafluoroethylene wax having an average particle diameter of 18 um, polyethylene resin beads having an average particle diameter of 7 um, and silica having an average particle diameter of 2 um, were used.

Three types of solid fine particles were blended with the binder resin at the content rate shown in Table 1 to prepare a resin composition, and 45 parts by mass of the resin composition and 100 parts by mass of the solvent were mixed to prepare a coating composition. The total content rate of the solid fine particles in the resin composition was as shown in Table 1.

A seven-layer battery packaging material 2 was prepared in the same manner as in Example 1 except for the resin composition and the coating composition for the substrate protective layer 20. The thickness of the substrate protective layer 20 after aging was 2.5 um.

### (Comparative Example 1)

A resin composition and a coating composition for forming the substrate protective layer 20 were prepared by the following method.

The same main agent resin and curing agent as those of Example 1 were used, and 12 parts by mass of the curing agent was blended with 60 parts by mass of the main agent resin to prepare a binder resin.

As the solid fine particles, four types of the solid fine particles, i.e., polytetrafluoroethylene wax having an average particle diameter of 10 µm, acrylic resin beads having an average particle diameter of 5 um, silica having an average particle diameter of 2 um, and barium sulfate having an average particle diameter of 1 um, were used.

Four types of solid fine particles were blended with the binder resin at the content rate shown in Table 1 to prepare a resin composition, and 40 parts by mass of the resin composition and 100 parts by mass of the solvent were mixed to prepare a coating composition. The total content rate of the solid fine particles in the resin composition was as shown in Table 1.

A seven-layer battery packaging material 2 was prepared in the same manner as in Example 1 except for the resin composition and the coating composition for the substrate protective layer 20. The thickness of the substrate protective layer 20 after aging was 3 um.

### (Comparative Example 2)

A resin composition and a coating composition for forming the substrate protective layer 20 were prepared by the following method.

The same main agent resin and curing agent as those of Example 3 were used, and 8 parts by mass of the curing agent was blended with 37 parts by mass of the main agent resin to prepare a binder resin.

As the solid fine particles, four types of solid fine particles, polyethylene wax having an average particle diameter of 20 um, polyethylene resin beads having an average particle diameter of 10 um, alumina having an average particle diameter of 2 um, and barium sulfate having an average particle diameter of 1 um, were used.

Four types of the solid fine particles were blended with the binder resin at the content rate shown in Table 1 to prepare a resin composition, and 50 parts by mass of the resin composition and 100 parts by mass of the solvent were mixed to prepare a coating composition. The total content rate of the solid fine particles in the resin composition was as shown in Table 1.

A seven-layer battery packaging material 2 was prepared in the same manner as in Example 1 except for the resin composition and the coating composition for the substrate protective layer 20. The thickness of the substrate protective layer 20 after aging was 2.5 um.

### (Comparative Example 3)

A resin composition and a coating composition for forming the substrate protective layer 20 were prepared by the following method.

The same main agent resin and curing agent as those of Example 1 were used, and 12 parts by mass of the curing agent was blended with 59 parts by mass of the main agent resin to prepare a binder resin.

As the solid fine particles, three types of solid fine particles, i.e., polytetrafluoroethylene wax having an average particle diameter of 18 um, polyethylene resin beads having an average particle diameter of 7 um, and silica having an average particle diameter of 2 um, were used.

Three types of solid fine particles were blended with the binder resin at the content rate shown in Table 1 to prepare a resin composition, and 40 parts by mass of the resin composition and 100 parts by mass of the solvent were mixed to prepare a coating composition. The total content rate of the solid fine particles in the resin composition was as shown in Table 1.

A seven-layer battery packaging material 2 was prepared in the same manner as in Example 1 except for the resin composition and the coating composition for the substrate protective layer 20. The thickness of the substrate protective layer 20 after aging was 3 um.

The prepared battery packaging materials 2 were measured and evaluated for the following items. The results are shown in Table 1. (Plane view area ratio of the portion of the protrusion with a height of 1 um or more from a reference plane of the arithmetic average height Sa)

The surface of the substrate protective layer was observed with a white interferometer according to the methods defined in ISO25178, and the reference plane of the arithmetic average height Sa in 1 mm square was determined. Then, an area of the portion having a height of 1 um or more from the reference plane was measured, and a plan view area ratio of the substrate protective layer in 1 mm square was obtained.

### (Formability)

The produced battery packaging material 2 was subjected to deep drawing of a rectangular parallelepiped shape having a vertical 55 mm and a horizontal 35 mm and a depth 4.5 mm using a forming machine (part number: TP-25C-XZ) manufactured by Amada Co., Ltd, and the formability was evaluated based on the following criteria.
⊚: No pinhole and no cracks occurred.
○: Pinhole and cracking did not occur, but very slight discoloration was observed in the substrate protective layer.
△: No pinhole or cracking occurred, but slight discoloration was observed in the substrate protective layer.
×: Pinhole or cracking occurred.

Note that △ and above are the qualities that can be used as a battery packaging material.

### (Tape Adhesive Properties)

A test piece with a width 15 mm × a length 150 mm was cut out from the battery packaging material 2. An adhesive tape (tesa 70415) having a width 5 mm and a length 80 mm and having an adhesive force of 13 N/cm was adhered to the substrate protective layer 20 of the test piece along the longitudinal direction of the test piece. Then, a hand roll having a weight 2 kgf was made to travel back and forth five times on the adhesive tape, and then allowed to stand at a normal temperature for one hour.

Next, using a tensile test machine, a strograph (AGS-5kNX) manufactured by Shimadzu Corporation was used, and an end of the test piece was pinched and fixed by one of chucks, and an end portion of the adhesive tape was grasped by the other chuck. In accordance with JIS K6854-3(1999), the peel strength was measured when the tape was peeled off at 108° (degrees) at the peeling rate of 300 mm/min, and the value at which the measured value was stabilized was defined as the adhesive force (unit: N/5mm) between the test piece and the adhesive tape.

The adhesive force between the test piece and the adhesive tape was evaluated according to the following criteria.
⊚: 7 N/5mm or more, and the adhesive property was very high
○: 5 N/5mm or more and less than 7 N/5mm, and adhesive properties was high
X : Less than 5 N/5mm, and the adhesive property was low

Noted that ○ or more are considered to be acceptable.

### (Adhesive Residues)

A test piece with a width 50 mm× a length 100 mm was cut out from the battery packaging material 2. An adhesive tape (Nitto Denko V420) having a width 40 mm and a length 60 mm and having an adhesive strength of 0.1 N/cm was adhered to the substrate protective layer 20 of the test piece along the longitudinal direction of the test piece. Then, a hand roll having a weight 2 kgf was made to travel back and forth five times on the adhesive tape.

Then, the test piece to which the adhesive tape was adhered was heat-pressed for 3 hours under the condition of 80 °C and 0.5 MPa.

Then, the adhesive tape was quickly peeled off from the test piece after the series of treatments, and the peeled surface was observed and evaluated according to the following criteria.
⊚: No change in the surface status as compared with the pre-adhering
○: There was a piece of adhesive that could be removed by wiping it lightly.
△: It could be removed by wiping, but a piece of adhesive larger than ○ remained
×: Adhesive that could not be removed by wiping remained firmly.

Note that ○ or more are considered to be acceptable.

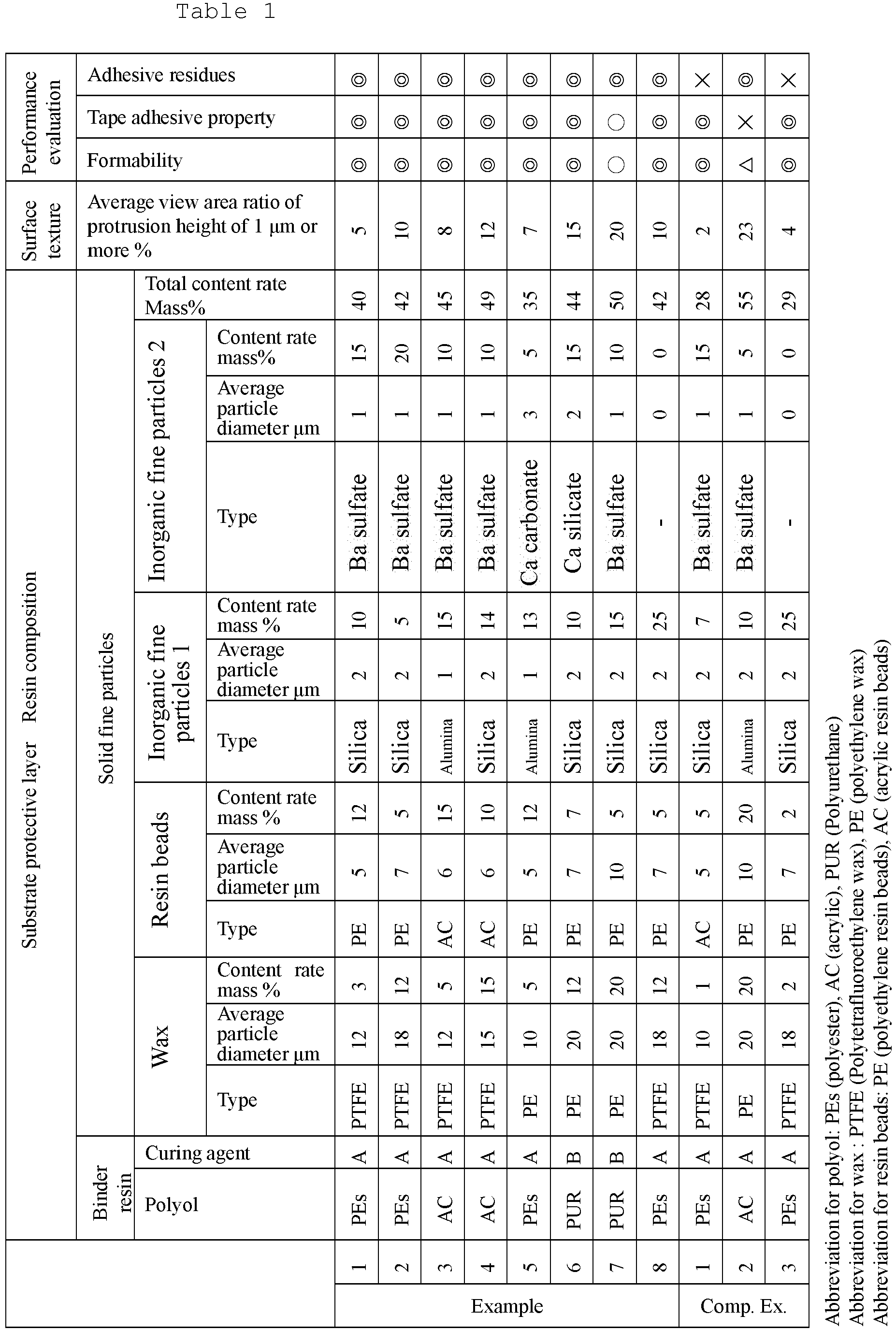

From Tables 1, it was confirmed that by specifying the surface texture of the substrate protective layer, the adhesive properties of the protective tape were good, and the adhesive residue at the time of separation could be suppressed.

### Industrial Applicability

The battery packaging material of the present invention is preferably used as a packaging material for a battery or a capacitor used for a mobile device, such as, e.g., a smart phone and a tablet computer, or for a battery or a capacitor used for storing power of an electric vehicle, wind power generation, and nighttime electricity.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive.

### Description of Symbols

- 1, 2:: Battery packaging material
- 11:: Barrier layer
- 12:: First adhesive layer
- 13:: Substrate layer
- 14:: Secondary adhesive layer
- 15:: Heat fusible resin layer
- 16:: Colored layer
- 20:: Substrate protective layer
- 21:: Binder resin
- 22:: Solid fine particles
- 30:: Protrusion

## Claims

1. A battery packaging material comprising:
a substrate layer;
a heat-fusible resin layer;
a barrier layer arranged between the substrate layer and the heat-fusible resin layer; and
a substrate protective layer as an outermost layer arranged on an outer side of the substrate layer,
wherein the substrate protective layer includes
a binder resin, and
wax, resin beads, and inorganic fine particles as solid fine particles, the solid fine particles projecting outward from a surface of the substrate protective layer to form protrusions, and
wherein, in a plan view of the substrate protective layer, an area ratio of a portion of the protrusion having a height of 1 um or more from a reference plane of an arithmetic average height Sa is 5% to 20%.

2. The battery packaging material as recited in claim 1,
wherein an average particle diameter of the wax is 5 um to 20 um, an average particle diameter of the resin beads is 1 um to 10 um, and an average particle diameter of the inorganic fine particles is 1 um to 10 um, and
wherein in the substrate protective layer, a content rate of the wax is 1 mass% to 20 mass%, a content rate of the resin beads is 1 mass% to 20 mass%, a content rate of the inorganic fine particles is 1 mass% to 40 mass%, and a total content rate of the wax, the resin beads, and the inorganic fine particles is 30 mass% to 50 mass%.

3. The battery packaging material as recited in claims 1 or 2,
wherein the wax is at least one wax selected from the group consisting of polyethylene wax, polypropylene wax, and polytetrafluoroethylene wax.

4. The battery packaging material as recited in any one of claims 1 to 3,
wherein the resin beads are at least one type of resin beads selected from the group consisting of acrylic resin beads, urethane resin beads, polyethylene resin beads, polystyrene resin beads, silicone resin beads, and fluororesin beads.

5. The battery packaging material as recited in any one of claims 1 to 4,
wherein the inorganic fine particles are at least one type of inorganic fine particles selected from silica, alumina, kaolin, calcium oxide, calcium carbonate, calcium sulfate, barium sulfate, and calcium silicate.

6. The battery packaging material as recited in any one of claims 1 to 5,
wherein the binder resin is at least one type of a resin selected from the group consisting of an acryl-based resin, a urethane-based resin, a polyolefin-based resin, a phenoxy-based resin, and a polyester-based resin.

7. The battery packaging material as recited in any one of claims 1 to 6,
wherein at least one of the substrate protective layer and the substrate layer contains a coloring agent.

8. The battery packaging material as recited in any one of claims 1 to 6,
wherein the barrier layer and the substrate layer are laminated via an adhesive layer, and at least one of the substrate protective layer, the substrate layer, and the adhesive layer includes a coloring agent.

9. The battery packaging material as recited in any one of claims 1 to 6,
wherein a colored layer is arranged at least one of between the substrate protective layer and the substrate layer and between the substrate layer and the barrier layer.

10. The battery packaging material as recited in any one of claims 1 to 6,
wherein the barrier layer and the substrate layer are laminated via an adhesive layer, and a colored layer is provided at least one of between the substrate protective layer and the substrate layer, between the substrate layer and the adhesive layer, and between the adhesive layer and the barrier layer.
